# EUROPEAN PATENT APPLICATION

(11) **EP 2 357 574 A1**
(43) Date of publication of application: **17.08.2011**
(21) Application number: 10154744.6
(22) Date of filing: 25.02.2010
(51) Int. Cl.: G06F 17/30

(54) **Method, device and system for controlling a display according to a defined sizing parameter**

(30) Priority: 12.02.2010 US 303833 P
(71) Applicant: RESEARCH IN MOTION LIMITED, Waterloo, Ontario N2L 3W8 (CA)
(72) Inventor: Klassen, Gerhard, Dietrich, Waterloo Ontario N2L 5Z5 (CA); Yach, David, Paul, Waterloo Ontario N2L 3W8 (CA); Quinn, Liam, Ronald, Waterloo Ontario N2L 5Z5 (CA)
(74) Representative: MERH-IP Matias Erny Reichl Hoffmann

(57) **Abstract**

A method, device and system for controlling a display according to a sizing parameter is provided. In an example, text elements on a web page are parsed, and any text elements that are smaller than a predefined font size are increased in size to the predefined size, while the remainder are left at their original size.

## Description

### FIELD

The present specification relates generally to computing devices and more specifically relates to a method, device and system for controlling a display according a defined sizing parameter.

### BACKGROUND

Mobile electronic devices with Internet connectivity are proliferating. Mobile electronic devices, however, typically have fewer memory and processing resources, smaller displays, and less bandwidth than their desktop computer counterparts. Web pages are typically optimized for desktop computers, such that they certain web pages do not generate well on mobile electronic devices.

### SUMMARY

An aspect of this specification provides a method of controlling a display according to a defined size parameter comprising:
receiving a web page;
receiving a size parameter for elements on the web page;
parsing the web page into elements;
increasing elements that violate the size parameter to a second size that conforms with the size parameter; and,
formatting and generating the web page with the elements.

The method can further comprise receiving a zoom-in instruction; performing the increasing in response to the zoom-in instruction; and, displaying only those portions of the web page in accordance with the zoom-in instruction.

The method can further comprise determining if one of the elements is in focus when the zoom-in instruction is received; modifying locations of at least some of the elements other than the one of the elements in order to accommodate changes the elements as a result of the increasing.

The method can further comprise determining if one of the elements is in focus when the zoom-in instruction is received; converting the one of the elements into a scrollable text box having a size corresponding to a size of the display.

The method can further comprise: determining if one of the elements in focus when the zoom-instruction is received; only performing the increasing if the one of the elements is in focus; providing a panning mechanism to change focus of a zoomed area of the web page.

The panning mechanism can be at least one of a vertical scroll bar and a horizontal scroll bar.

The display can include a touch-screen and the panning mechanism can be responsive to dragging tactile input received via the touch-screen.

The panning mechanism can provide access to an entirety of the web page, and not just the zoomed area.

The method can further comprise receiving panning instruction via the panning mechanism; reversing the increasing if focus changes away from the one of the elements.

The method can further comprise activating a panning feature if the web page cannot be generated within a defined size of the display and while preserving an original aspect ratio of the web page.

The method can further comprise increasing elements that do not violate the size parameter to a third size until the web page can generated within a defined size of the display and while preserving an original aspect ratio of the web page.

The increasing can be configured to be only performed on elements that contain content, such as text elements.

Another aspect of the specification provides a computing device comprising configured to perform a method according to any of the foregoing.

Another aspect of this specification provides a computer readable medium for storing a plurality of programming instructions that are executable on a processor of a computing device so as to control a display according to a defined size parameter, the instructions comprising a method according to any of the foregoing.

### BRIEF DESCRIPTION OF THE DRAWINGS

Figure 1 is a schematic representation of a system for controlling a display according to a defined sizing parameter.

Figure 2 is a block diagram of the device shown in Figure 1.

Figure 3 is an example of the web page shown in the system of Figure 1.

Figure 4 shows the web page of Figure 3 parsed into various elements.

Figure 5 shows a flow chart depicting a method for controlling a display according to a defined sizing parameter.

Figure 6 shows an example of the generation of the web page of Figure 3 on the display of Figure 2 after performance of the method of Figure 5.

Figure 7 shows the web page of Figure 6, but without labelling the various elements.

Figure 8 shows a flow chart depicting another method for controlling a display according to a defined sizing parameter.

Figure 9 shows an example of the generation of the web page of Figure 3 on the display of Figure 2 after performance of the method of Figure 8.

Figure 10 shows a flow chart depicting another method for controlling a display according to a defined sizing parameter.

Figure 11 shows an example of the generation of the web page of Figure 3 on the display of Figure 2 after performance of the method of Figure 8.

Figure 12 shows a flow chart depicting another method for controlling a display according to a defined sizing parameter.

Figure 13 is another example of a web page.

Figure 14 shows the web page of Figure 13 having a zooming function applied thereto.

Figure 15 shows the web page of Figure 14 having a zooming function applied thereto.

Figure 16 shows the web page of Figure 13 having another zooming function applied thereto.

Figure 17 shows the web page of Figure 16 after vertical panning.

Figure 18 shows the web page of Figure 13 having another zooming function applied thereto.

Figure 19 shows the web page of Figure 18 after vertical panning.

Figure 20 shows a flow chart depicting another method for controlling a display according to a defined sizing parameter.

Figure 21 shows a flow chart depicting a particular way of implementing one of the blocks of the method of Figure 20.

### DETAILED DESCRIPTION OF THE EMBODIMENTS

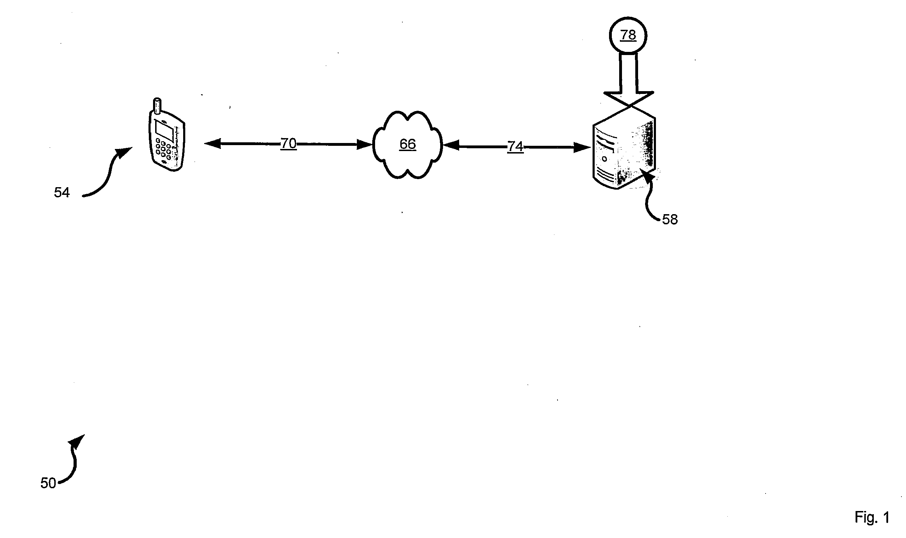

Referring now to Figure 1, a system for controlling a display according to a defined sizing parameter is indicated generally at 50. In a present embodiment system 50 comprises a first computing device in the form of a computing device 54 and a second computing device in the form of a server 58. A network 66 interconnects each of the foregoing components. A first link 70 interconnects computing device 54 with network 66. A second link 74 interconnects server 58 with network 66. Server 58 is configured to host a web page 78 that can be loaded onto device 54.

Computing device 54 can be any type of electronic device that can be used in a self-contained manner and to interact with content available on network 66. Interaction includes displaying of information on computing device 54 as well as to receive input at computing device 54 that can in turn be sent back over network 66. Computing device 54 will be explained in greater detail below.

Server 58 can be based on any well-known server environment including a module that houses one or more central processing units, volatile memory (e.g. random access memory), persistent memory (e.g. hard disk devices) and network interfaces to allow server 58 to communicate over network 66. For example, server 58 both can be a Sun Fire V480 running a UNIX operating system, from Sun Microsystems, Inc. of Palo Alto Calif., and having four central processing units each operating at about nine-hundred megahertz and having about sixteen gigabytes of random access memory. However, it is to be emphasized that this particular server is merely exemplary, and a vast array of other types of computing environments for server 58 is contemplated.

It should now be understood that the nature of network 66 and links 70 and 74 associated therewith is not particularly limited and are, in general, based on any combination of architectures that will support interactions between computing device 54 and server 58. In a present embodiment network 66 itself includes the Internet as well as appropriate gateways and backhauls to links 70 and 74. Accordingly, the links 70 and 74 between network 66 and the interconnected components are complementary to functional requirements of those components.

More specifically, in a present embodiment system 50 includes link 70 between computing device 54 and network 66. Link 70 is based, in a present embodiment, on core mobile network infrastructure (e.g. Global System for Mobile communications ("GSM"); Code Division Multiple Access ("CDMA"); CDMA 2000; 3G) or on wireless local area network ("WLAN") infrastructures such as the Institute for Electrical and Electronic Engineers ("IEEE") 802.11 Standard (and its variants) or Bluetooth or the like or hybrids thereof. Note that in an exemplary variation of system 50 it is contemplated that computing device 54 could be other types of computing devices whereby link 70 is a wired connection. System 50 also includes link 74 which can be based on a T1, T3, 03 or any other suitable wired or wireless connection between server 58 and network 66.

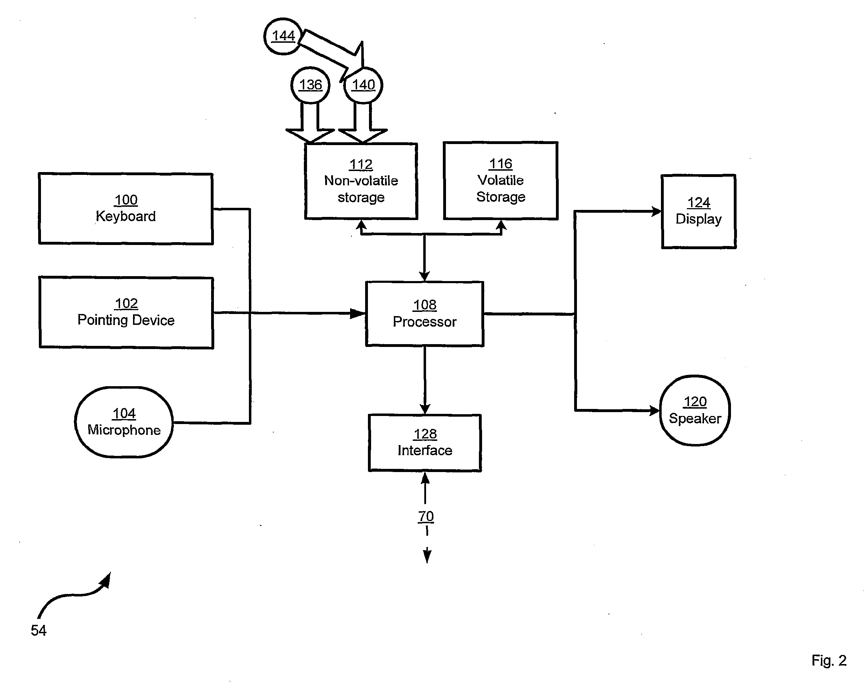

In a present embodiment, computing device 54 is a mobile electronic device with the combined functionality of a personal digital assistant, a cell phone, and an email paging device. Many well known cellular telephone models, or variants thereof, are suitable for the present embodiment. Referring now to Figure 2, a schematic block diagram of device 54 is shown. It should be emphasized that the structure in Figure 2 is purely exemplary, and contemplates a device that be used for both wireless voice (e.g. telephony) and wireless data (e.g. email, web browsing, text) communications. Device 54 includes a plurality of input devices which in a present embodiment includes a keyboard 100, a pointing device 102, and a microphone 104. Pointing device 102 can be implemented as a track wheel, trackball or the like. Other input devices, such as a touch screen are also contemplated. Input from keyboard 100, pointing device 102 and microphone 104 is received at a processor 108. Processor 108 is configured to communicate with a non-volatile storage unit 112 (e.g. Erase Electronic Programmable Read Only Memory ("EEPROM"), Flash Memory) and a volatile storage unit 116 (e.g. random access memory ("RAM")). Programming instructions that implement the functional teachings of device 54 as described herein are typically maintained, persistently, in non-volatile storage unit 112 and used by processor 108 which makes appropriate utilization of volatile storage 116 during the execution of such programming instructions. Variants on device 54 can include a laptop computer or a desktop computer.

Processor 108 in turn is also configured to control a speaker 120 and a display 124. Processor 108 also contains a network interface 128, which is implemented in a present embodiment as a radio configured to communicate over link 70. In general, it will be understood that interface 128 is configured to correspond with the network architecture that defines link 70. It should be understood that in general a wide variety of configurations for device 54 are contemplated.

In a present embodiment, device 54 is also configured to maintain a web browser application 136 within non-volatile storage 112. Processor 108 is configured to execute web browser application136, receive input from keyboard 100 and pointing device 102 relative to web browser application 136, and to generate graphical interfaces on display 124 relative to web browser 136. Device 54 is further configured to maintain a configuration file 140 that includes at least one element sizing parameter 144. Processor 108 is further configured to control display 124, when executing web browser application 136, so as to generate elements within web page 78 according to a sizing parameter 144, as will be explained further below.

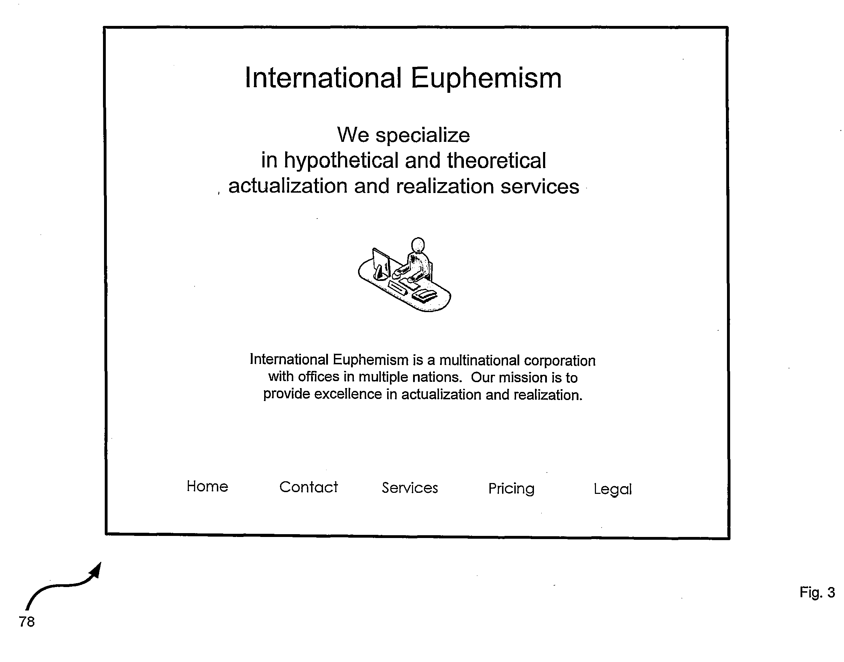

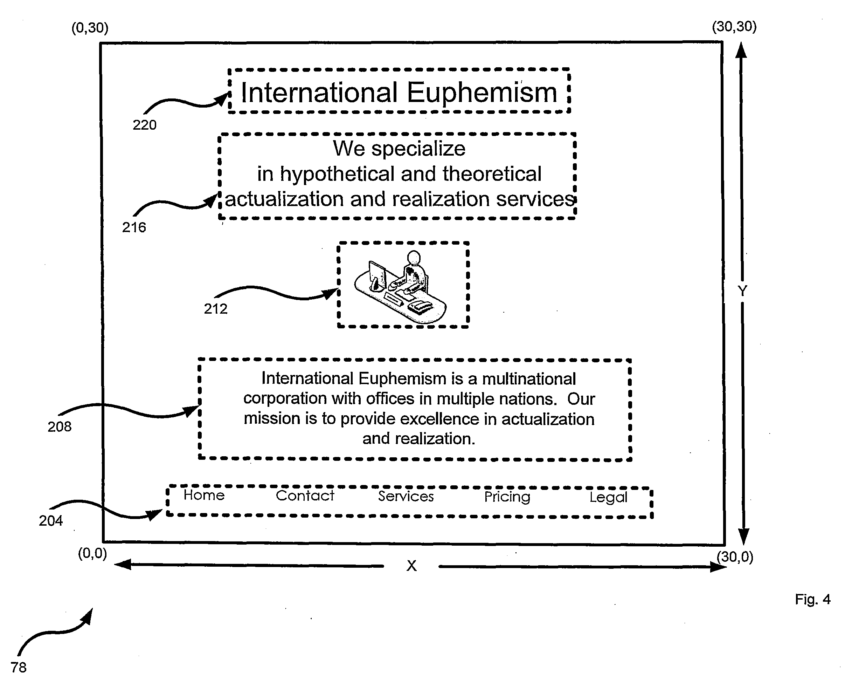

Referring now to Figure 3, an exemplary version of web page 78, as web page 78 would be generated on a desktop computer web browser according to the programming of web page 78. Web page 78 is shown again in Figure 4, except that in Figure 4 various elements of web page 78 are enclosed in dashed-line boxes. Table I provides further details about each element.

**Table I**

| Element Number | Type | Bottom Left Corner (X,Y) | Top Right Corner (X,Y) | Font | Font Size |
|---|---|---|---|---|---|
| 204 | Text | (5,2) | (25,4) | Century Gothic | 12pt |
| 208 | Text | (7,7) | (23,11) | Arial | 14pt |
| 212 | Graphic | (13,13) | (20,20) | N/A | N/A |
| 216 | Text | (8,20) | (22,26) | Arial | 18pt |
| 220 | Text | (9,27) | (21,29) | Arial | 24pt |

The Element Number Column in Table I corresponds to the same element as indicated in Figure 4. The Type Column indicates whether or not the element is "text" or "graphics". In other embodiments, other types of element can of course be specified according to the hyper text markup language (HTML) and its extensions. The Bottom Left Corner Column indicates, in X,Y coordinates where the bottom left corner of the element begins, while the Top Right Corner Column indicates, in X,Y coordinates where the top right corner of the element finishes. The Font Column indicates the font of the element, if the element is text. The Font Size Column indicates the size of the font of the element, if the element is text.

Note that the size of web page 78 is thirty by thirty, with the X axis running along the bottom of Figure 4, and the Y axis running along the length of Figure 4, with (zero,zero) being located in the bottom left corner of web page 78.

It is to be understood that web page 78, Figure 4 and Table I are simplified for the purposes of explaining the present embodiment. Thus, it should be appreciated that the units of the X axis and the Y axis are not intended to conform with any computing standard but are simply for explanation purposes. It is also to be understood that the contents of web page 78, including Table I but also including other data used to render web page 78, can all be codified using HTML and if desired, extensions to HTML.

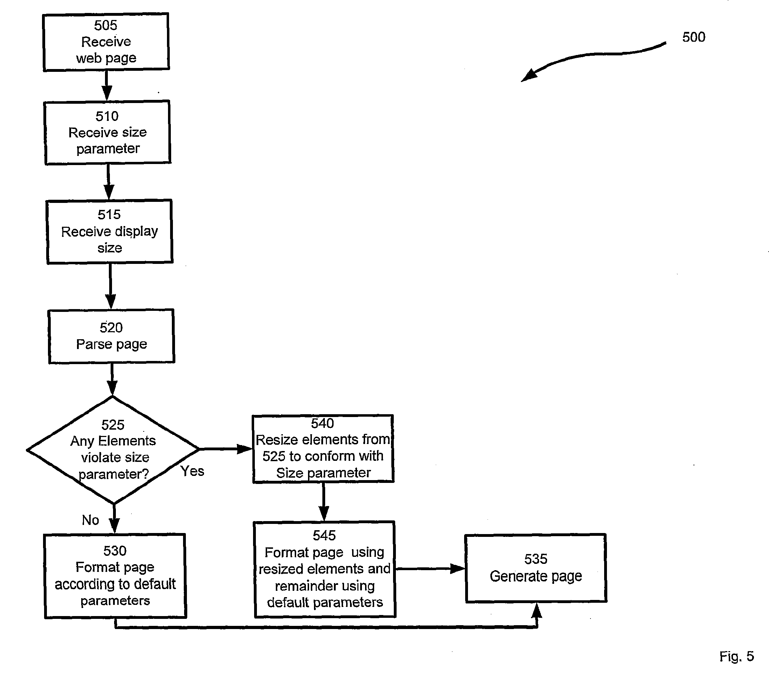

Referring now to Figure 5, a method for controlling a display according to a defined sizing parameter is represented in the form of a flowchart and indicated generally at 500. In a present embodiment, method 500 can be performed using device 54 but it is to be understood that variations on method 500 and device 54 are contemplated.

When performed on device 54, it is generally contemplated that web browser application 136 is being executed by processor 108 at the time of invocation of method 500. Indeed, method 500 can be incorporated into web browser application 136.

It is also contemplated that web page 78 is being accessed from network 58 by web browser application 136. (It should be understood however, that no connection to network 66 or server 58 is needed, as method 500 can be performed using a locally cached version of a web page maintained in either storage 112 or storage 116.)

Beginning at block 505, a web page is received. In the present example web page 78 is received in storage 112 or storage 116 for further processing. At block 510, a size parameter is received. In the present example, the size parameter is a minimum element size for the element type "text" (i.e. a minimum font size) will be discussed, but upon complete review of the specification it will become apparent how to apply these teachings to other element types. The minimum font size will typically have been previously saved, as a configuration setting, within device 54. In the present example, the minimum font size is saved within configuration file 140, as sizing parameter 144. As part of this exemplary performance of method 500, it will be assumed that sizing parameter 144 is set to equal "fourteen point" as being the minimum font size that is to be used for generating text on display 124 using web browser application 136.

At block 515, a display size is received. The received display size corresponds to the physical size of display 124, as addressable and usable by processor 108 executing web browser application 135 so as to control display 124 in order to generate a web page on display 124. As part of this exemplary performance of method 500, it will be assumed that the display size is "thirty by thirty", equivalent to of web page 78. It should be understood, however, that there is no need for these sizes to be equal.

Block 520 comprises parsing the page. Block 520 can be implemented by processor 108, executing web browser application 136, so as to examine web page 78 and parse it into its elements. The parsing can be effected by an examination of a document object model (DOM) that implements web page 78. The result of block 520 can be the concise extraction of data according to Table I. However block 520 is effected, the result therefrom is part of a determination made at block 525, wherein a determination is made as to whether any of the elements within web page 78 violate the sizing parameter. In a present embodiment, the determination made at block 525 is whether any of the text elements in web page 78 have a font that is smaller than fourteen point.

A "no" determination at block 525 leads to block 530, which comprises formatting web page 78 for generation on display 124 using various default parameters that would be used to generate a web page 78 absent the teachings herein. Block 530 is followed by block 535, at which point processor 108 controls display 124 so as to generate web page 78 on display 124 as per the formatting at block 530.

A "yes" determination at block 525 leads to block 540, which comprises resizing the elements that triggered the "yes" determination at block 525 according to the sizing parameter. In the present embodiment, the various text elements that were in web page 78 that have a font smaller than fourteen point font are scaled up to fourteen point. An examination of Table I shows that element 204 has a font size smaller than twelve point, which would thereby trigger a "yes" determination at block 525. Table II thus shows the result of performance of block 540, as element 204 is increased in font size to fourteen point ― but the remainder of the elements are not changed.

**Table II**

| Element Number | Type | Bottom Left Corner (X,Y) | Top Right Corner (X,Y) | Font | Font Size |
|---|---|---|---|---|---|
| 204' | Text | (5,2) | (25,4) | Century Gothic | 14pt |
| 208 | Text | (7,7) | (23,11) | Arial | 14pt |
| 212 | Graphic | (13,13) | (20,20) | N/A | N/A |
| 216 | Text | (8,20) | (22,26) | Arial | 18pt |
| 220 | Text | (9,27) | (21,29) | Arial | 24pt |

Block 540 is followed by block 545, which comprises formatting web page 78 for generation on display 124 using the resized elements form block 540, but otherwise formatting according to the various default parameters that would be used to generate a web page 78 absent the teachings herein. Block 545 is followed by block 535, at which point processor 108 controls display 124 so as to generate web page 78 on display 124 as per the formatting at block 545.

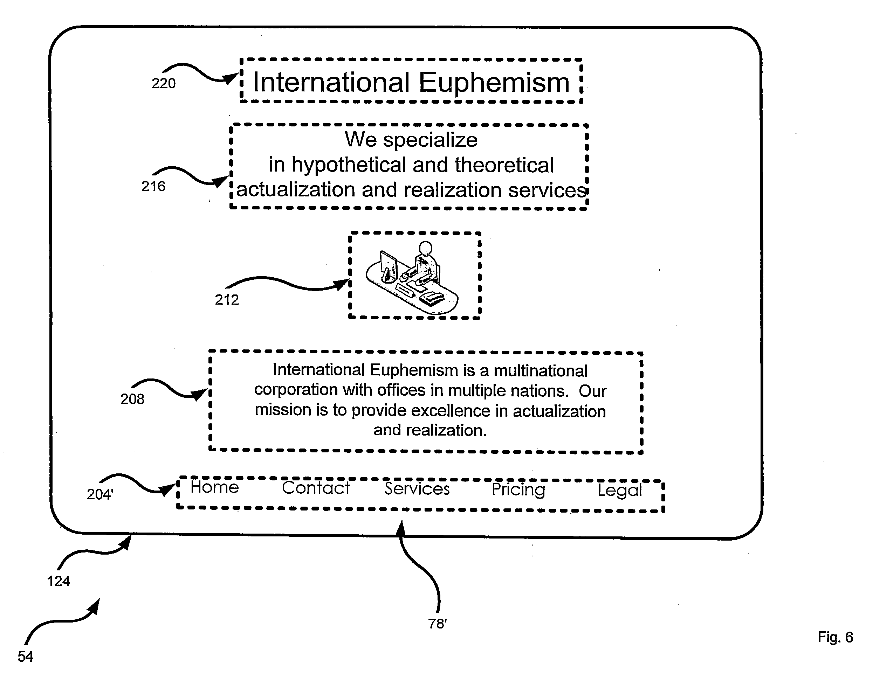

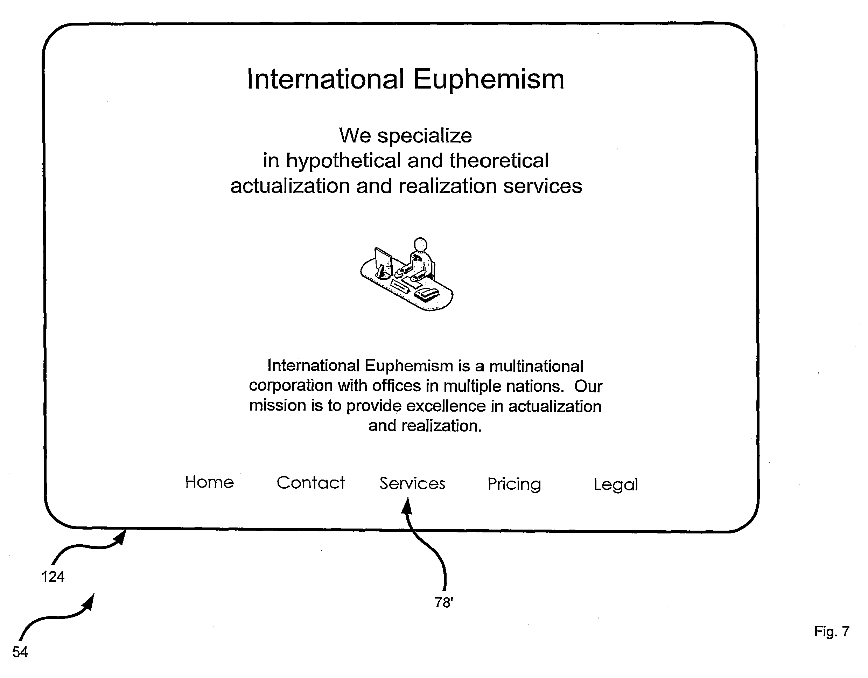

Figure 6 and Figure 7 shows the result of exemplary performance of block 545, as modified web page 78' (being a modified version of web page 78) is shown as generated on display 124. In modified web page 78', element 208, element 212, element 216, and element 220 are generated as originally programmed and stored on server 58, in substantially the same manner as shown in Figure 3, but modified web page 78' also comprises modified element 204', which is the same as element 204, except that the font size in modified element 204' is fourteen point, instead of twelve point. Figure 6 shows modified web page 78' with all of the elements separately labeled, but Figure 7 is intended to show how modified web page 78' would actually be generated on display 124.

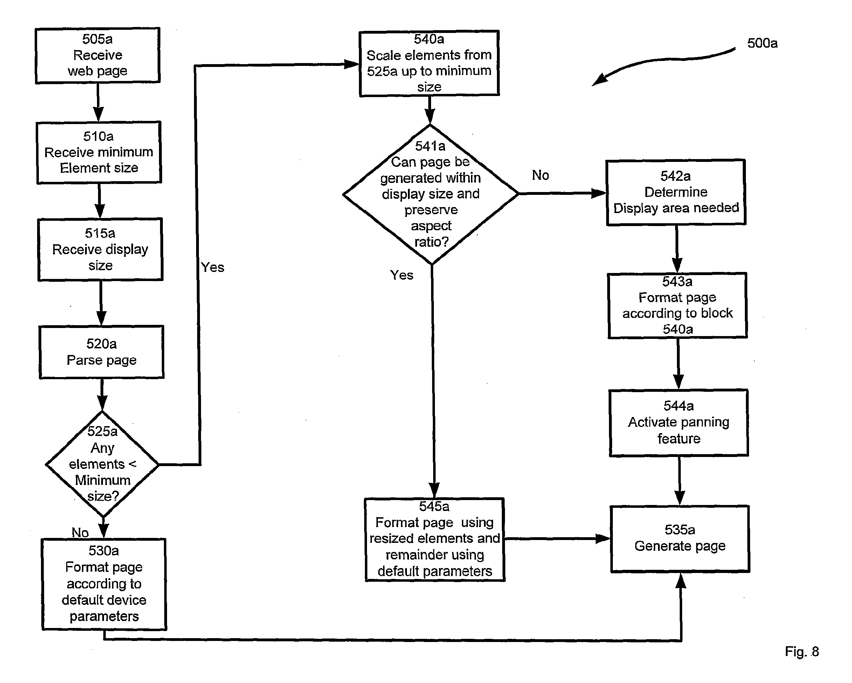

Modifications and variations of the foregoing are contemplated. Figure 8 shows a modified version of method 500, indicated as method 500a. Blocks in method 500a generally correspond to blocks in method 500 that bear the same reference characters, but followed by the suffix "a". Of note is that method 500a is directed specifically to the sizing parameter of minimum font size, but method 500a could be modified to other types of sizing parameters. Also of note is that in addition to all of the blocks of method 500, in method 500a four additional blocks are provided, namely, block 541 a, block 542a, block 543a, and block 544a.

Method 500a is intended to address the possibility that, as a result of performing block 540a, it is possible that the resized elements will no longer fit within the physical size constraints of display 124, even if the non-resized elements still fit within the physical size constraints of display 124. Method 500a is not strictly necessary, for even the event there is an issue with fit using in method 500, it can be desired to utilize method 500 and accept that certain elements may be truncated or overlap with other elements. However, method 500a can optionally be employed in order to address this possibility. The like blocks in method 500a will not be discussed.

Block 541 a comprises making a determination as to whether the web page, with the resized elements from block 540a, can be generated within the physical size constraints of display 124, while at the same time preserving the original aspect ratio of web page 54. A "yes" determination moves to block 545a, where method 545a completes in the same manner as method 500a. A "no" determination at block 541a results in advancement to block 542a, where a determination is made as to the actual physical size that would be needed to accommodate the size-increased element(s) from block 540a. At block 543a, the page is formatting according to the increased size as determined at block 542a. Block 544a comprises activating a panning feature, where input can be received from keyboard 100 or pointing device 102 that permits horizontal or vertical panning in order to view the portion of the complete page that is actually being generated. Block 535a is substantially the same as block 535, except that when block 535a is reached from block 544a, the panning feature is also part of the page generation.

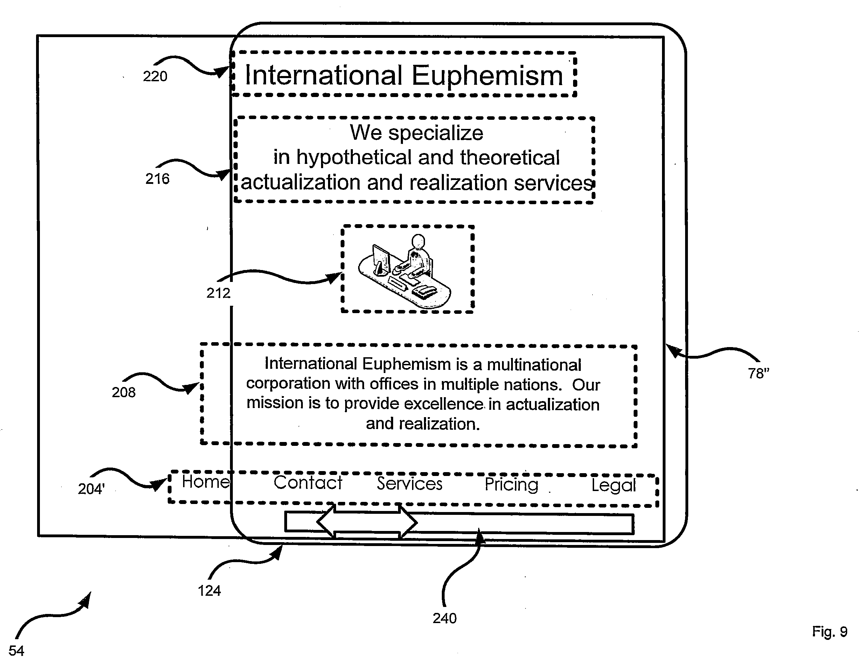

Figure 9 shows an example of web page 78" as a result of performing method 500a, wherein a horizontal scroll bar 240 is included for horizontal scrolling along the width of web page 74", the horizontal scroll bar 240 provided as a result of block 544a. In Figure 9, according to method 500a, element 204' has been scaled to a certain minimum font size (which not expressly discussed, but larger than the example given in relation to method 500), and as a result web page 78" no longer fits within the size of display 124. Elements 208, 212, 216 and 220 have not been scaled but maintain their original size. As a result of the scaling of element 204', however, panning functionality is added so that the aspect ratio of web page 78 is substantially preserved.

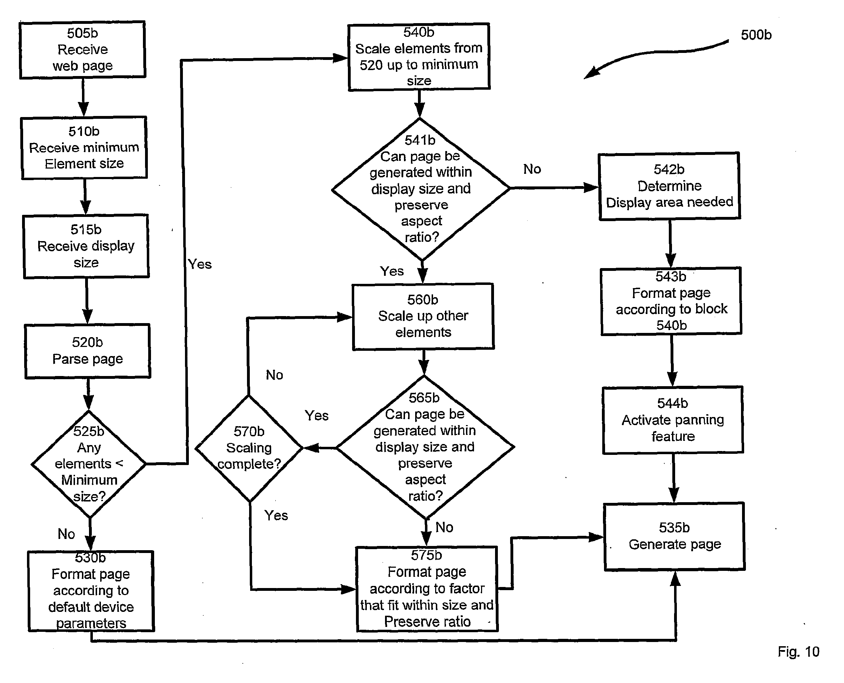

Figure 10 shows a modified version of method 500a, indicated as method 500b. Blocks in method 500b generally correspond to blocks in method 500a that bear the same reference characters, but followed by the suffix "b" instead of "a". Of note is that method 500b is directed specifically to the sizing parameter of minimum font size, but method 500b could be modified to other types of sizing parameters. Also of note is that in addition to all of the blocks of method 500a, in method 500b four additional blocks are provided, namely, block 560b, block 565b, block 570b, and block 575b.

Method 500b is intended to address the possibility that, as a result of performing block 540a, it is possible that the resized elements will still fit within the physical size constraints of display 124, and that additional room remains to increase the size of the remaining elements and still fit the completely resized set of elements within the physical size constraints of display 124. Blocks 541 b-544b can be omitted from method 500b.

Block 541 b, like block 541a, comprises determining if the page can be generated, even after the scaling of block 540b in such a way as to preserve the aspect ratio of the original web page 78, but still fit the scaled elements, and the remaining elements within the physical size of display 124. On a 'yes' determination, at block 560b the remaining elements (i.e. the elements that were not increased in size at block 540b) are increased in size at block 560b. The increase in size at block 560b can be based on small increments, or can be proportional to the amount of scaling that occurred at block 540b. Block 565b comprises a repeat of the determination at block 541 b, to test if the new sizing of all of the elements still fits within the physical size of display 124. On a 'yes' determination at block 565b, then at block 570b a determination is made as to whether the scaling is complete. A 'yes' determination can be made at block 570b if all of the scaling is now proportional. Other criteria for the determination at block 570b are contemplated. A 'no' determination at block 570b returns method 500b back to block 560b. A 'no' determination at block 565b, or a 'yes' determination at block 570b lead to block 575b. Block 575b is similar to block 545a. Block 575b comprises formatting the page according to the scaling at 560b that fits all of the elements into the physical size of display 124 and preserves the aspect ratio of web page 78.

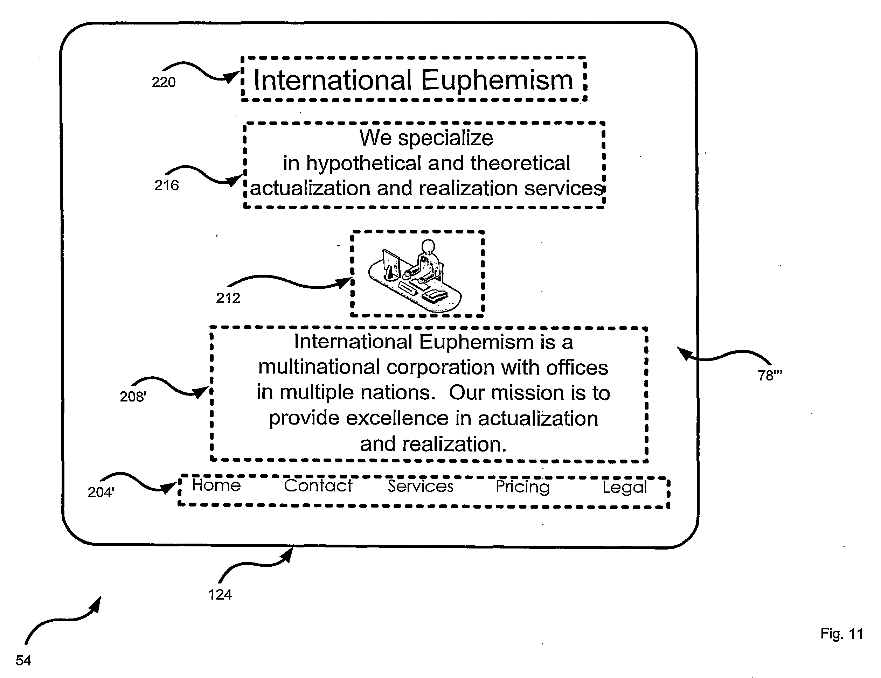

Figure 11 shows an example of web page 78"' as a result of performing method 500b, wherein element 204' has been increased to the minimum font size at block 540b, and element 208' has been increased to eighteen point font, which is a size that still permits web page 78"' to fit within the size of display 124. Elements 212, 216 and 220 have not been scaled to simplify this example.

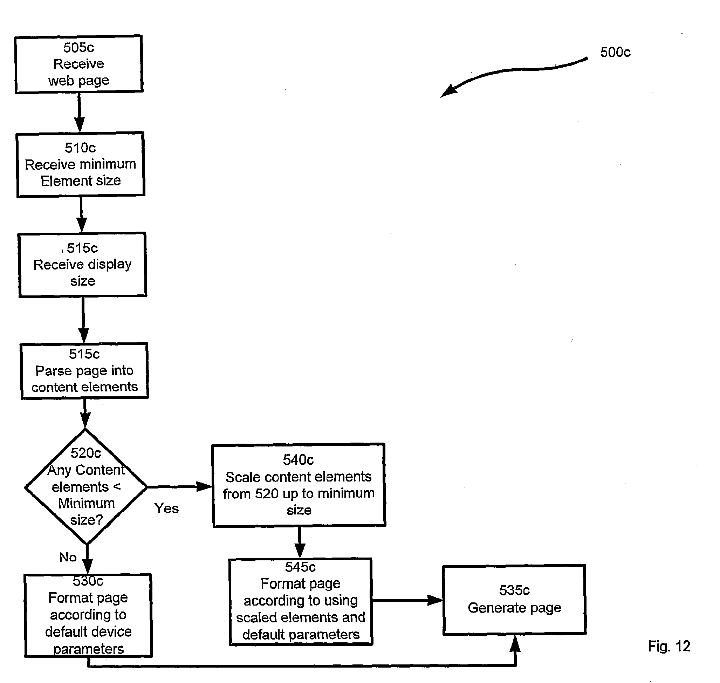

Figure 12 shows a modified version of method 500b, indicated as method 500c. Blocks in method 500c generally correspond to blocks in method 500 that bear the same reference characters, but followed by the suffix "c". Method 500c is substantially the same as method 500, except that in block 515c, only "content" elements are parsed instead of parsing all elements. For example, method 500c can be configured so that element 212, an image, is never parsed at block 515c, thereby saving processing resources. A more complex version of block 515c includes examining each of the text elements in web page 78 and judging whether or not such text elements actually convey content, as opposed to simply providing selectable links to other web pages. Element 204 can be viewed as simply providing selectable links to other web pages, even it include text, and therefore omitted from further processing in method 500c.

It should be understood that various components of any of methods 500, 500a, 500b and 500c can be varied or combined with each other, or other embodiments discussed herein.

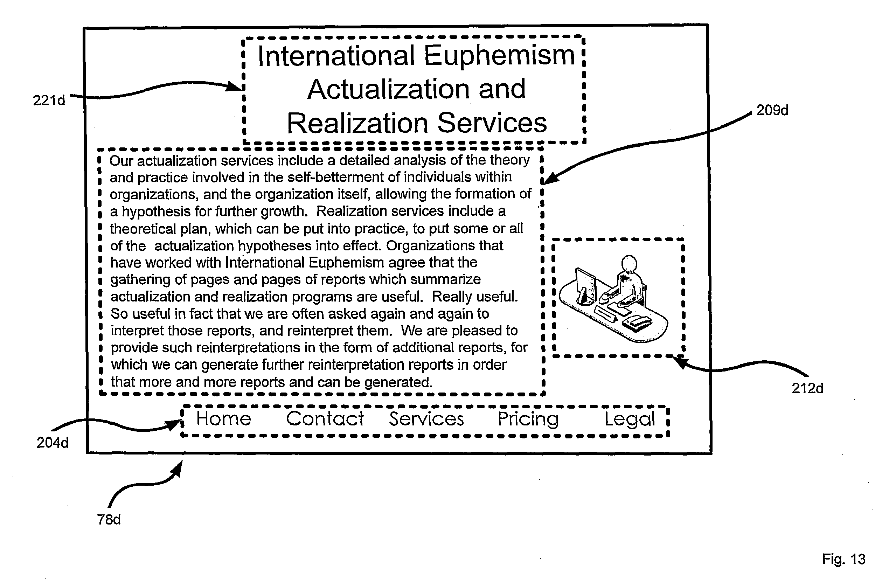

Other embodiments are also contemplated. Referring now to Figure 13, an exemplary version of another web page 78d is shown. In Figure 13, web page 78d is shown as it would be generated on a desktop computer web browser according to the programming of web page 78d. Web page 78d is shown with various elements of web page 78d enclosed in dashed-line boxes, in the same way as discussed in relation to web page 78 in Figure 4. It will thus be understood that the dashed-line boxes themselves are not part of web page 78d. Table III provides further details about each element.

**Table III**

| Web page 78d (Figure 13, Figure 14 and Figure 15) Total Area = 30x30 | | | | | |
|---|---|---|---|---|---|
| Element Number | Type | Bottom Left Corner (X,Y) | Top Right Corner (X,Y) | Font | Font Size |
| 204d | Text | (5,2) | (28,4) | Century Gothic | 16pt |
| 209d | Text | (1,4) | (23,22) | Arial | 12pt |
| 212d | Graphic | (24,8) | (29,15) | N/A | N/A |
| 221d | Text | (9,23) | (26,29) | Arial | 24pt |

It will be understood that web page 78d can be generated on display 124 (or any display of a computer running a web browser) as previously discussed or in the usual manner. It will also be understood that the when web page 78d is generated on display 124, the elements of web page 78d may be too small to be visually perceived, and accordingly one or more zoom functions on device 54 can be deployed to enlarge various elements.

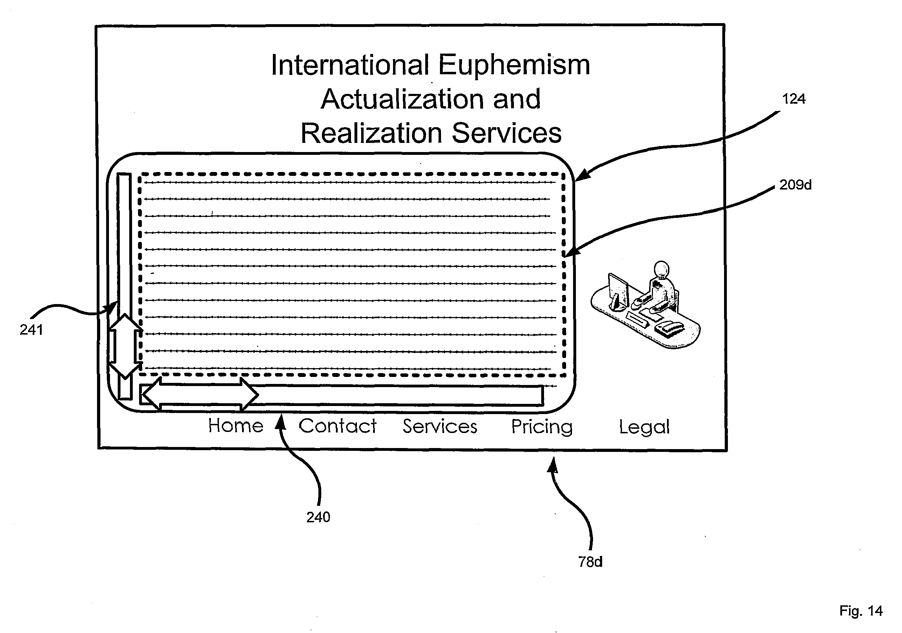

As a particular example, a first zoom function may be applied to element 209d, as shown in Figure 14, where element 209d occupies the entire area of display 124. (Not all elements are labeled in Figure 14, or the subsequent features, for convenience). A horizontal scroll bar 240 and a vertical scroll bar 241 are provided to allow panning to the remainder of web page 78d. (It should be noted that other mechanism of receiving input to allow panning are contemplated, such as via a touchscreen where the focus of display 124 can be "dragged" to another location through touch).

Note that as illustrated in Figure 14, it is contemplated that despite applying the first zoom function, the text within element 209d is still too small to be visually perceived, and therefore further one or more further zoom function may be applied in accordance with the present teachings. The fact that the text in element 209d is still too be small to be visually perceived is represented in Figure 14 by showing the text within element 209d as a plurality of horizontal lines rather than the actual text within element 209d that can be seen in Figure 13.

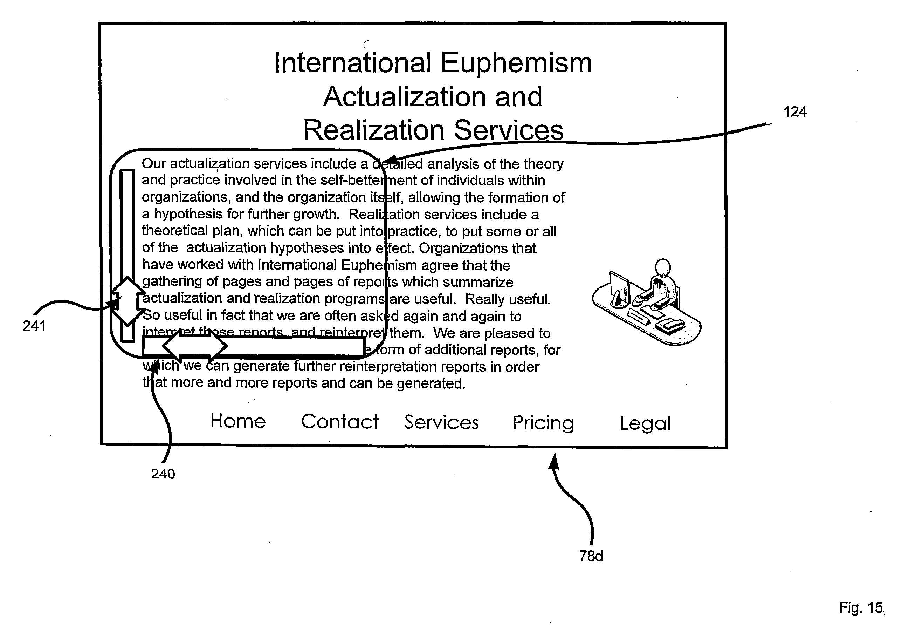

One option for a further zoom level is shown, again by way of example, in Figure 15, where a second zoom function is applied so that only a portion of element 209d fills the entire area of display 124. The second zoom function utilizes the same computational processing methods as the first zoom function, and at this point the text may now be of sufficient size to be visually perceived, and horizontal scroll bar 240 and a vertical scroll bar 241 can be used to view the remainder of the text. The fact that the text in element 209d is now visually perceivable according to the second zoom function is represented in Figure 15 by showing the text within element 209d as the same text as shown in Figure 13.

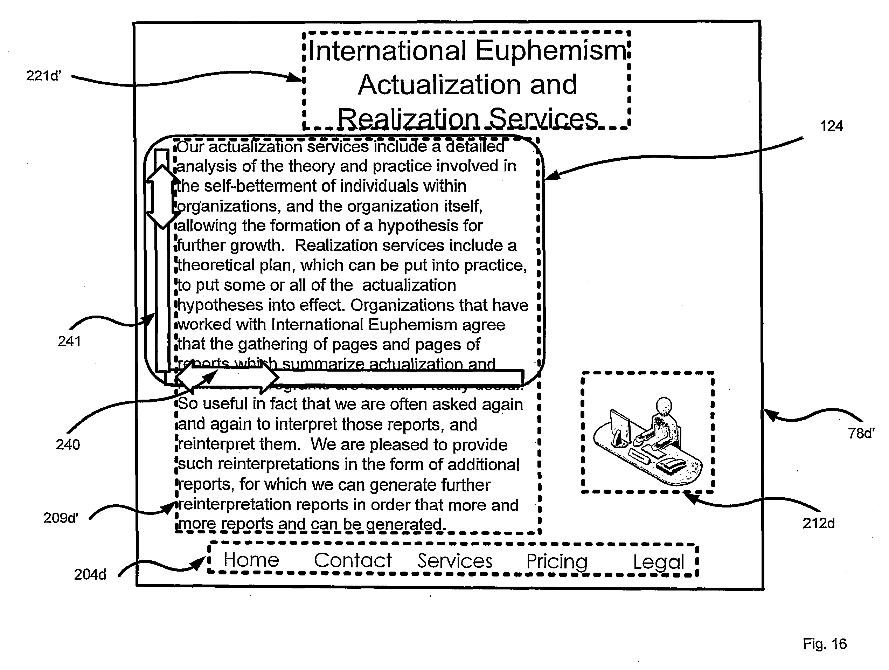

Another option for a further zoom level is shown, again by way of example, in Figure 16, where a third zoom function is applied so that a modified web page 78d' is generated. The third zoom function utilizes different computational processing methods than the first zoom function and second zoom function. In modified web page 78d', the font size within element 209d is increased to generate element 209d'. In the process of generating element 209d', the original formatting of web page 78d is corrupted, and as a result the amount of area within web page 78d' is larger than the area of web page 78d, and the locations dedicated to certain elements change. Table V provides details about each element in modified web page 78d'.

**Table V**

| Modified web page 78d' Figure 16 and Figure 17 Total Area = 30x40 | | | | | |
|---|---|---|---|---|---|
| Element Number | Type | Bottom Left Corner (X,Y) | Top Right Corner (X,Y) | Font | Font Size |
| 204d | Text | (5,2) | (28,4) | Century Gothic | 16pt |
| 209d' | Text | (1,4) | (23,32) | Arial | 14pt |
| 212d | Graphic | (24,8) | (29,15) | N/A | N/A |
| 221 d' | Text | (9,33) | (36,39) | Arial | 24pt |

It can be noted that as part of generation of web page 78d', the actual area was enlarged from thirty-by-thirty to thirty-by-forty. It can be seen in Table V and Figure 16 that element 209d' was generated from element 209 to provide a larger font and a larger area dedicated to accommodate the larger font text. At the same time element 221d' was generated from element 221 d and set at a new location to accommodate the larger area occupied by element 209d'. Those skilled in the art will now recognize that modified web page 78d' is now a corrupted version of web page 78d, in that generation of the entirety of modified web page 78d' would lead to an appearance that departs significantly from the original appearance of web page 78d. The corruption would be more acute for computers that expect to generate a web page having a size or scale corresponding to the original thirty-by-thirty, and yet now modified web page 78d' has a size of thirty-by-forty. However, it will also now be recognized that since only a portion of modified web page 78d', (i.e. a portion of element 209d') is actually being generated on display 124, then the corruption in modified web page 78d' is not actually perceivable.

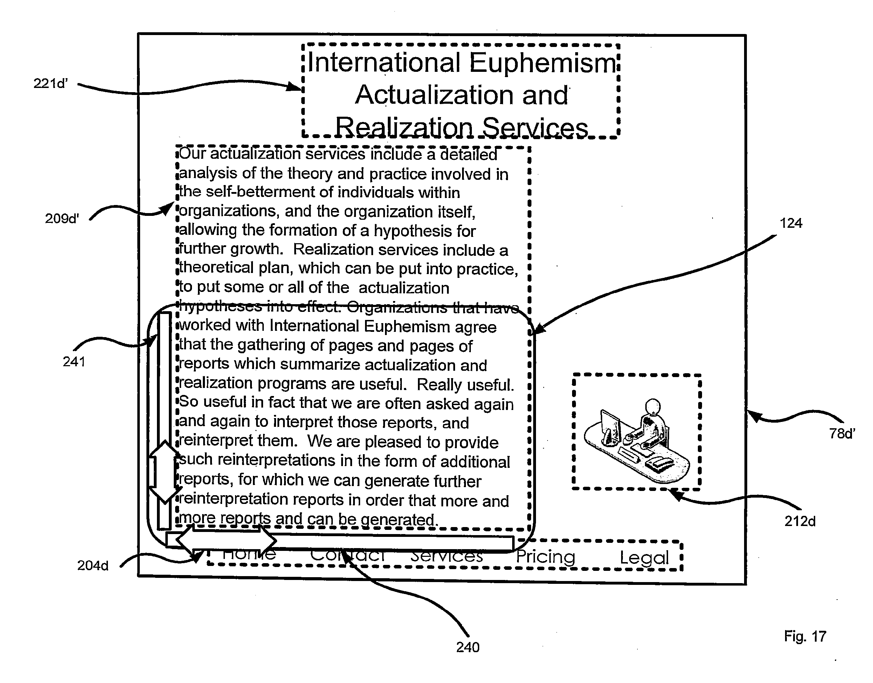

For further illustration, Figure 17 is another representation of the third zoom function and modified web page 78d' as shown in Figure 16, where the vertical scroll bar 241 has been utilized to scroll down the length of element 209d', to generate the final portion of text within element 209'd on display 124.

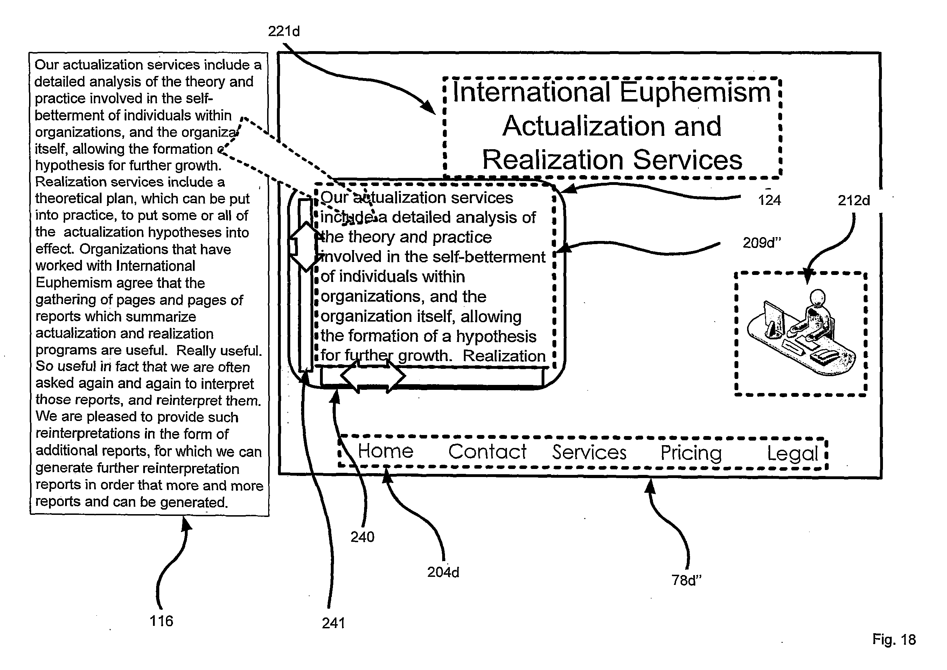

Another option for a further zoom level is shown, again by way of example, in Figure 18, where a fourth zoom function is applied so that a modified web page 78d" is generated. The fourth zoom function utilizes different computational processing methods than the first zoom function, the second zoom function and the third zoom function. In modified web page 78d", the font size within element 209d is increased to generate element 209d". In addition, the entirety of element 209d is regenerated in element 209d" as a scrollable window which is configured to occupy the full area of display 124. In the process of generating element 209d", the original formatting of web page 78d is otherwise unchanged, and so the locations dedicated to the elements remain the same. Table VI provides details about each element in modified web page 78d'.

**Table VI**

| Web page 78d" Figure 18 and Figure 19 Total Area = 30x30 | | | | | |
|---|---|---|---|---|---|
| Element Number | Type | Bottom Left Corner (X,Y) | Top Right Corner (X,Y) | Font | Font Size |
| 204d | Text | (5,2) | (28,4) | Century Gothic | 16pt |
| 209d" | Scrollable Text window | (1,4) | (14,22) | Arial | 14pt |
| 212d | Graphic | (24,8) | (29,15) | N/A | N/A |
| 221d | Text | (9,23) | (26,29) | Arial | 24pt |

It can be noted that as part of generation of web page 78d", the actual area of thirty-by-thirty remained unchanged. Those skilled in the art will now recognize that generation of the entirety of modified web page 78d" on a computer display from a web browser would lead to an appearance that departs from the original appearance of web page 78d, but would nonetheless not have artifacts due to scaling. In any event, it can be seen in Table VI and Figure 17 that element 209d" was generated from element 209 to provide a larger font and a scrollable text window to accommodate the larger font text, whereby any remaining text that is not visible is placed into storage 116 (or storage 112 or both), but for retrieval and generation within element 209d" on display 124 as a scrolling instruction via vertical scroll bar 241 (or other mechanism) instructs processor 108 to effect such retrieval and generation.

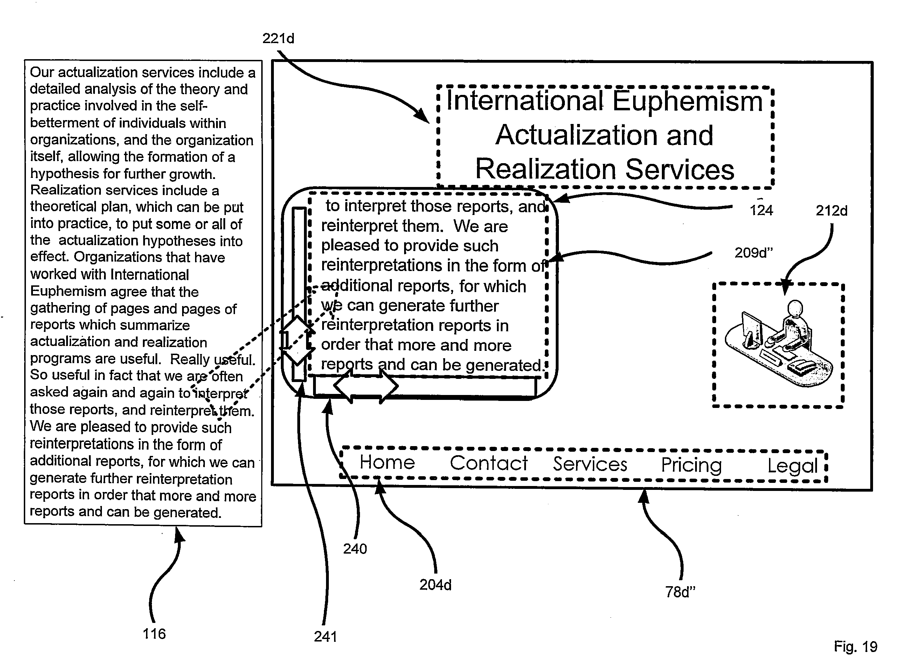

For further illustration, Figure 19 is another representation of the fourth zoom function and modified web page 78d" as shown in Figure 18, where the vertical scroll bar 241 has been utilized to scroll down the length of element 209d", to generate the final portion of the text within element 209d" on display 124.

In an embodiment, during invocation of any of the various zoom functions, vertical scroll bar 241 and horizontal scroll bar 240 are generated to represent the location of the specific portion being viewed within the context of the *entirety* of web page 78d, or web page 78d', or web page 78d", or any of them, as they are being generated on display 124. (Again, other scrolling mechanisms that are functionally equivalent to vertical scroll bar 241 and horizontal scroll bar 240 can be likewise configured.) According to this embodiment, activation of vertical scroll bar 241 to an extreme upper position will accordingly result in loss of complete focus on element 209d (or its variants element 209d' or element 209d") and place focus on all or part of element 221 d, depending on the corresponding position of horizontal scroll bar 240. By the same token, activation of vertical scroll bar 241 to an extreme lower position will accordingly result in loss of complete focus on element 209d (or its variants element 209d' or element 209d") and place focus on all or part of element 204d, depending on the corresponding position of horizontal scroll bar 240. By the same token, activation of horizontal scroll bar 240 to an extreme right position will accordingly result in loss of focus on element 209d (or its variants element 209d' or element 209d") and place focus on all or part of element 212d, depending on the corresponding position of vertical scroll bar 241. In this manner, scrolling functions such as scroll bar 241 and scroll bar 240 are configured to behave in the examples of Figure 15, Figure 16, Figure 17, Figure 18 and Figure 19 in substantially the same manner as they would function as they are generated in the example of Figure 14. In this manner, modified web page 78d' and modified web page 78d" can be navigated according an experience that is not materially different from the experience of navigating original web page 78d. As a further variation to this particular embodiment, device 54 can be configured such that when web page 78d' is being generated, and scrolling activity indicates a loss of focus on element 209d', then generation of modified web page 78d' can cease and be replaced with generation of original web page 78d. A return to focus on element 209d can result in regeneration of modified web page 78d'. Likewise, device 54 can be configured such that when web page 78d" is being generated, and scrolling activity indicates a loss of focus on element 209d", then generation of modified web page 78d" can cease and be replaced with generation of original web page 78d. A return to focus on element 209d can result in regeneration of modified web page 78d".

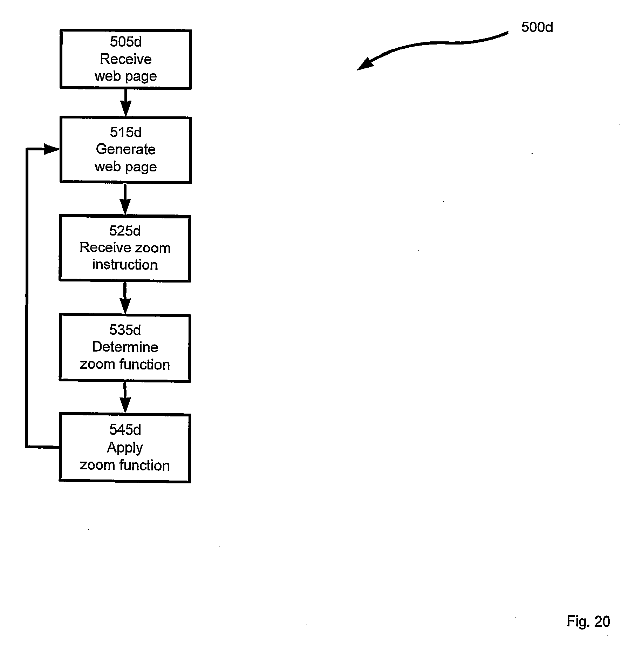

Referring now to Figure 20, another method for controlling a display is represented in the form of a flowchart and indicated generally at 500d. Method 500d provides one exemplary process that can be utilized by processor 108 to control display 124 so as to receive a web page and navigate between the exemplary various views shown in Figure 13, Figure 14, Figure 15, Figure 16, Figure 17, Figure 18 and Figure 19.

Block 505d comprises receiving a web page. In the non-limiting example discussed herein, it can be assumed that web page 78d is received.

Block 515d comprises generating the received web page. In the non-limiting example, web page 78d can be generated on display 124 as shown in Figure 15. Those skilled in the art will now recognize that various elements on web page 78d may be too small to be visually perceived due to the small area of display 124.

It is to be understood that the generation of a web page 515d can include providing instructions that operate on web page 515d during its generation, including text searching, panning, printing, closing of the web browser, etc. Block 525d, however, specifically contemplates the reception of a zoom instruction via any input device associated with device 54. The means by which the zoom instruction is inputted is not particularly limited, and can include, for example, input via keyboard 100 that comprises invocation of a menu that includes a zoom option or entering a predefined key sequence, or include input via pointing device 102, or a combination of input from keyboard 100 and pointing device 102. The zoom instruction at block 525d can also be a zoom-in instruction or a zoom-out instruction.

Block 535d comprises determining a zoom function. Recall that different zoom functions that invoke different computational processing methods can be employed according to the exemplary teachings associated with Figure 13, Figure 14, Figure 15, Figure 16, Figure 17, Figure 18 and Figure 19. Block 535d thus comprises determining a zoom function such as one of the zoom functions discussed in relation to Figure 14, Figure 15, Figure 16, Figure 17, Figure 18 and Figure 19. (In variations, zoom functions corresponding to method 500, method 500a, method 500b or method 500c can also be determined). Block 535d will be discussed further below.

Block 545d comprises applying the zoom function determined at block 535d, and then method 500d returns to block 515d where the web page is regenerated using the determined zoom function. For example, where the view shown in Figure 13 is being generated on display 124 and assuming that the first zoom function as discussed above was determined at block 535d, then the view shown in Figure 14 would be generated.

If block 525d is reached again, a further zoom function can be determined at block 535d and applied at block 545d for further regeneration at block 515d. For example, where the view shown in Figure 14 is being generated on display 124 and assuming that the second zoom function as discussed above was determined at block 535d, then the view shown in Figure 15 would be generated. As an alternative example, where the view shown in Figure 14 is being generated on display 124 and assuming that the third zoom function as discussed above was determined at block 535d, then the view shown in Figure 16 or Figure 17 could be generated. As another alternative example, where the view shown in Figure 14 is being generated on display 124 and assuming that the fourth zoom function as discussed above was determined at block 535d, then the view shown in Figure 18 or Figure 19 could be generated.

While the foregoing contemplated the receipt of zoom-in instructions at block 525, it should be understood that method 500d also contemplates that block 525d can receive zoom-out instructions as well as zoom-in instructions. In the case of zoom-out instructions, then the reverse of the zoom-in processes as discussed above can be invoked, so that, for example, views in Figure 16 or Figure 17 can be reversed in favour of, for example, generating the view in Figure 13.

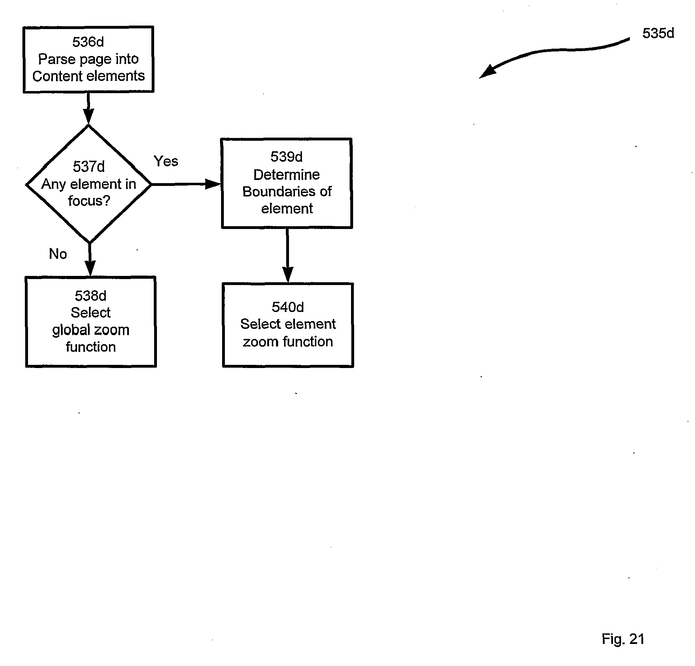

As indicated earlier, block 535d can be implemented in a variety of ways. One way to implement 535d is to provide a menu, or a unique set of key strokes, or other unique sequence of inputs, or the like that includes selections for various type of zoom functions, so that the determined zoom function is manually selectable. The determination at block 535d can also be automated. Where a zoom-in instruction is received, then one way to automate the determination at block 535d is shown in Figure 21, where block 536d comprises parsing the web page into a plurality of content elements. In the example of Figure 13, web page 78d can be parsed into the elements as shown in Table III.

Block 537d comprises determining if any particular element is in focus at the time the zoom instruction was received. For example, if the entirety of web page 78d' is being generated on display 124, then it will be determined that no particular element is in focus. In this event, block 538d is invoked which comprises selecting global zoom function. The global zoom function can correspond to the first zoom function discussed above, leading to, for example, generation of display 124 as shown in Figure 14.

As another example, if only element 209d is being generated, as shown in Figure 14, when block 537d is reached then it will be determined that, "yes", a particular element is in focus. Leading to block 539d. In this event, block 538d is invoked which comprises determining the boundaries of the in-focus element, and then block 540d comprises selecting an element zoom function. The element zoom function can correspond to the third zoom function discussed above, leading to, for example, generation of display 124 as shown in Figure 16 or Figure 17. The element zoom function can also correspond to the fourth zoom function discussed above, leading to, for example, generation of display 124 as shown in Figure 18 or Figure 19.

Variations, combinations or subsets or all of the foregoing of the embodiments are contemplated. As a specific, non-limiting example of such combinations, the minimum element size parameter referenced in relation to block 510a can be incorporated into block 540d. In the specific example discussed above, a default minimum font size can be used to as part of generation of element 209d' or element 209d", to establish the font size that should be used for such generation. It will also now be apparent that method 500 and its variants can be used to generate the views shown in Figure 16, Figure 17, Figure 18 or Figure 19 or any of them.

Various advantages are provided herein. One example of an advantage is that a web page that is optimized for viewing on a desktop computer can be viewed and navigated on a device having a smaller display, without having to reprogram the original web page and at the same time providing for a navigating experience on the smaller display that is substantially similar to the experience on a larger display.

## Claims

1. A method of controlling a display according to a defined size parameter comprising:
receiving a web page;
receiving a size parameter for elements on said web page;
parsing said web page into elements;
increasing elements that violate said size parameter to a second size that conforms with said size parameter; and,
formatting and generating said web page with said elements.

2. The method of claim 1 further comprising:
receiving a zoom-in instruction;
performing said increasing in response to said zoom-in instruction;
displaying only those portions of said web page in accordance with said zoom-in instruction.

3. The method of claim 2 further comprising:
determining if one of said elements is in focus when said zoom-in instruction is received;
modifying locations of at least some of said elements other than said one of said elements in order to accommodate changes said elements as a result of said increasing.

4. The method of claim 2 further comprising:
determining if one of said elements is in focus when said zoom-in instruction is received;
converting said one of said elements into a scrollable text box having a size corresponding to a size of said display.

5. The method of claim 2 further comprising:
determining if one of said elements in focus when said zoom-instruction is received;
only performing said increasing if said one of said elements is in focus;
providing a panning mechanism to change focus of a zoomed area of said web page.

6. The method of claim 5 where said panning mechanism is at least one of a vertical scroll bar and a horizontal scroll bar.

7. The method of claim 5 where display includes a touch-screen and said panning mechanism is responsive to dragging tactile input received via said touch-screen.

8. The method of claim 5 wherein said panning mechanism provides access to an entirety of said web page.

9. The method of claim 5 further comprising:
receiving panning instruction via said panning mechanism;
reversing said increasing if focus changes away from said one of said elements.

10. The method of any of claims 1 to 9 further comprising activating a panning feature if said web page cannot be generated within a defined size of said display and while preserving an original aspect ratio of said web page.

11. The method of any of claims 1 to 10 further comprising increasing elements that do not violate said size parameter to a third size until said web page can generated within a defined size of said display and while preserving an original aspect ratio of said web page.

12. The method of any of claims 1 to 11 wherein said increasing is only performed on content elements.

13. The method of claim 13 wherein said content elements are text elements.

14. A computing device comprising:
an input device;
a processor connected to said input device and configured to receive input therefrom;
storage connected to said processor and configured to maintain a web page and a sizing parameter;
a display connected to said processor and controllable by said processor;
said processor configured to perform a method according to any one of claims 1-13.

15. A computer readable medium for storing a plurality of programming instructions that are executable on a processor of a computing device so as to control a display according to a defined size parameter, said instructions comprising a method according to any one of claims 1-13.

## Amended claims

### Amended claims in accordance with Rule 137(2) EPC.

**1.** A method of controlling a display (124) according to a defined size parameter comprising:
receiving (505) a web page (78);
receiving (510) a size parameter for elements on said web page (78);
parsing (520) said web page (78) into elements;
increasing (540) elements that violate said size parameter to a second size that conforms with said size parameter; and,
formatting (545) and generating (535) said web page (78) with said elements.

**2.** The method of claim 1 further comprising:
receiving (525d) a zoom-in instruction;
performing (545d) said increasing in response to said zoom-in instruction;
displaying only those portions of said web page (78) in accordance with said zoom-in instruction.

**3.** The method of claim 2 further comprising:
determining (537d) if one of said elements is in focus when said zoom-in instruction is received;
modifying locations of at least some of said elements other than said one of said elements in order to accommodate changes said elements as a result of said increasing.

**4.** The method of claim 2 further comprising:
determining (537d) if one of said elements is in focus when said zoom-in instruction is received;
converting said one of said elements into a scrollable text box having a size corresponding to a size of said display (124).

**5.** The method of claim 2 further comprising:
determining (537d) if one of said elements in focus when said zoom-instruction is received;
only performing said increasing if said one of said elements is in focus;
providing a panning mechanism to change focus of a zoomed area of said web page (78).

**6.** The method of claim 5 where said panning mechanism is at least one of a vertical scroll bar (241) and a horizontal scroll bar (240).

**7.** The method of claim 5 where display (124) includes a touch-screen and said panning mechanism is responsive to dragging tactile input received via said touch-screen.

**8.** The method of claim 5 wherein said panning mechanism provides access to an entirety of said web page (78).

**9.** The method of claim 5 further comprising:
receiving panning instruction via said panning mechanism;
reversing said increasing if focus changes away from said one of said elements.

**10.** The method of any of claims 1 to 9 further comprising activating a panning feature if said web page (78) cannot be generated within a defined size of said display (124) and while preserving an original aspect ratio of said web page (78).

**11.** The method of any of claims 1 to 10 further comprising increasing elements that do not violate said size parameter to a third size until said web page (78) can generated within a defined size of said display (124) and while preserving an original aspect ratio of said web page (78).

**12.** The method of any of claims 1 to 11 wherein said increasing is only performed on content elements.

**13.** The method of claim 12 wherein said content elements are text elements.

**14.** A computing device (54) comprising:
an input device (100, 102, 104);
a processor (108) connected to said input device (100, 102, 104) and configured to receive input therefrom;
storage (112) connected to said processor (108) and configured to maintain a web page (78) and a sizing parameter;
a display (124) connected to said processor (108) and controllable by said processor (108);
said processor (108) configured to perform a method according to any one of claims 1-13.

**15.** A computer readable medium for storing a plurality of programming instructions that are executable on a processor of a computing device so as to control a display (124) according to a defined size parameter, said instructions comprising a method according to any one of claims 1-13.
